# EUROPEAN PATENT APPLICATION

(11) **EP 4 087 044 A1**
(43) Date of publication of application: **09.11.2022**
(21) Application number: 21171979.4
(22) Date of filing: 04.05.2021
(51) Int. Cl.: H01M 50/213, H01M 50/22, H01M 50/249, H01M 50/284

(54) **CELL HOLDER**

(71) Applicant: Rimac Automobiles Ltd., 10431 Sveta Nedelja (HR)
(72) Inventor: Dilberovic, Zlatko, 10410 Velika Gorica (HR)
(74) Representative: Hoffmann Eitle

(57) **Abstract**

A cell holder for a battery module comprising a plurality of battery cells, said cell holder comprising a body, said body having: a top surface; a bottom surface; a plurality of side surfaces connecting the bottom surface and the top surface; and a plurality of through holes extending between the top surface and the bottom surface, wherein each through hole is arranged to receive at least one battery cell.

## Description

### TECHNICAL FIELD

The present invention relates to the field of battery modules comprising a plurality of battery cells and more particularly to a cell holder for a battery module comprising a plurality of battery cells.

### BACKGROUND

Battery cells and in particular battery modules comprising a plurality of battery cells such as tens, hundreds or even thousands of battery cells densely packed within a limited space of the battery module as well as battery packs comprising one or more such battery modules play an increasing role in renewable energy usage and storage. As an example, in the recent years the popularity and wide use of motor vehicles that entirely or at least in part use electric power stored in such battery packs for propulsion, such as electric vehicles or hybrid vehicles, has increased significantly such that these motor vehicles tend to replace the conventional fuel-based vehicles. Such battery packs in electric vehicles and hybrid vehicles may also be called traction battery packs. On the other hand, also the fuel-based vehicles may use such battery packs as motor vehicle starter battery.

The performance of electric vehicles and hybrid vehicles, such as for example the acceleration process, the maximum achievable speed as well as the electric range i.e. the driving range of the motor vehicle using the electric power stored in the plurality of battery cells of the battery pack is highly dependent on the number of the battery cells, the characteristics of the battery cells and in particular on the storage capacity of the battery cells, the size and weight of the battery cells, but also on the temperature management of the battery cells.

With continuous improvement of the performance of electric vehicles and hybrid vehicles the demand for battery packs having high storage capacity is increasing. This requires that the number of battery cells that are accommodated in the battery module mounted in the battery pack as well as the number of battery modules mounted in the battery pack is also increased.

In the example of electric vehicles and hybrid vehicles, the battery pack is mounted in an available location in the vehicle, such as for example in the floor of the vehicle or in an available space in the luggage compartment of the vehicle and hence has limited dimensions and needs to be compact to fit in the available space and therefore the packaging density of the battery cells in the battery module(s) mounted in the battery pack needs to be high. Even further, it is important that the battery cells are packed in a stable manner in the battery module to increase the structural stability of the battery module and accordingly the battery pack and to make the battery pack more sustainable to mechanical influence from the outside.

Therefore, there is a need for providing for an arrangement that enables that the battery cells are firmly held in place in the battery module and that increases the structural stability of the battery module.

### SUMMARY

The mentioned problems and objects are met by the subject-matter of the independent claims. Advantageous embodiments are defined in the dependent claims.

According to an aspect of the present invention there is provided a cell holder for a battery module comprising a plurality of battery cells, said cell holder comprising a body, said body having:
a top surface, a bottom surface, a plurality of side surfaces connecting the bottom surface and the top surface, and a plurality of through holes extending between the top surface and the bottom surface, wherein each through hole is arranged to receive at least one battery cell.

According to a further aspect of the present invention there is provided a battery module comprising the cell holder according to the previous aspect and a plurality of battery cells, wherein each battery cell is fixed in a through hole of the plurality of through holes of the cell holder.

According to a still further aspect of the present invention there is provided a method of assembling the battery module according to the previous aspect, the method comprising the steps of: inserting each one of the plurality of battery cells in a through hole of the cell holder; and fixing each one of the plurality of the battery cells to the respective through hole.

### BRIEF DESCRIPTION OF THE DRAWINGS

Embodiments of the present invention which are presented for better understanding the inventive concept of the present invention, but which are not to be seen as limiting the present invention, will now be described with reference to the figures in which:
- Fig. 1: shows schematically the battery module according to the embodiment of the present invention;
- Fig. 2: shows exploded view of the battery module according to the embodiment of the present invention;
- Fig. 3: shows schematically the cell holder according to the embodiment of the present invention;
- Figs. 4A and 4B: show schematically cross-sectional enlarged views of parts of the cell holder according to the embodiment of the present invention;
- Fig. 5: shows schematically highlighted features of the cell holder according to the embodiment of the present invention;
- Fig. 6: shows schematically highlighted features of the cell holder according to the embodiment of the present invention;
- Fig. 7: shows schematically a view of the front part of the battery module according to the embodiment of the present invention.

### DETAILED DESCRIPTION

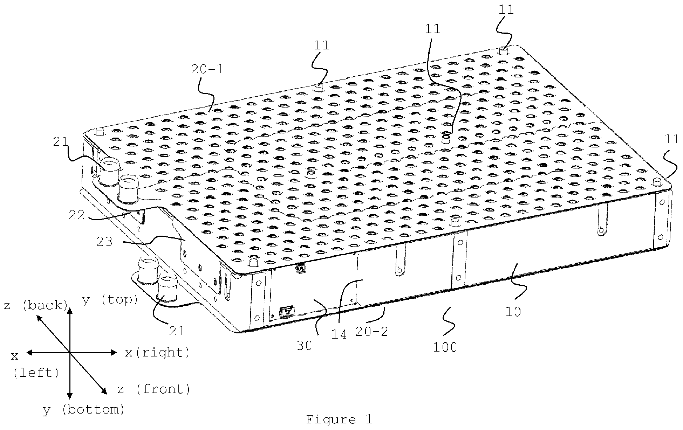

Figure 1 shows schematically a battery module 100 according to the embodiment of the present invention.

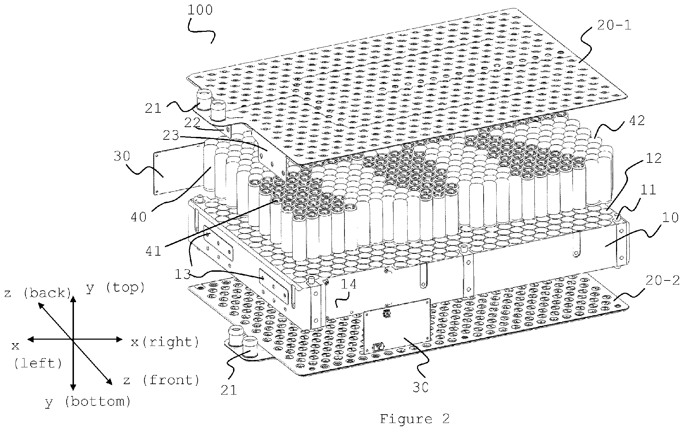

The battery module 100 comprises a cell holder 10 in which a plurality of battery cells 40 (seen in figure 2) are inserted and fixed.

The battery module 100 comprises further cooling arrangements. In this embodiment of the present invention these cooling arrangements are, by way of example, cold plate assemblies, i.e. a first cold plate assembly 20-1 on the top side (according to the designated direction on the coordinate system in figure 1) of the battery module 100 and second cold plate assembly 20-2 on the bottom side of battery module 100. In this embodiment of the present invention the first cold plate assembly 20-1 and the second cold plate assembly 20-2 may also be called a top cold plate assembly 20-1 and a bottom cold plate assembly 20-2, according to the designation "top" and "bottom" in figure 1. In other embodiments of the present invention the first cold plate assembly 20-1 may be on the bottom side of the battery module 100 while the second cold plate assembly 20-2 may be on the top side of the battery module 100.

In this embodiment of the present invention the first cold plate assembly 20-1 and the second cold plate assembly 20-2 have the function of providing cooling to the plurality of battery cells 40 mounted in the battery module 100 and electrically connecting the plurality of battery cells 40 to each other. For providing cooling to the plurality of battery cells 40 the first cold plate assembly 20-1 and the second cold plate assembly 20-2 shown in figure 1 comprise, by way of example, features like cooling connection fittings 21 for distribution of a cooling fluid in the cold plate assembly 20-1, 20-2 for cooling the plurality of battery cells 40. For electrically connecting the plurality of battery cells 40 to each other the first cold plate assembly 20-1 and the second cold plate assembly 20-2 comprise, by way of example, electrical connections such as interconnections or interconnections busbars (not shown in figure 1).

In other embodiments of the present invention only one cold plate assembly 20-1 may be provided on the top side of the battery module 100 or on the bottom side of the battery module 100. In still other embodiments of the present invention the first cold plate assembly 20-1 and second cold plate assembly 20-2 shown in figure 1 may be omitted and other arrangements that also provide the function of cooling the plurality of battery cells, for example bare cold plates, and electrically connecting the plurality of battery cells to each other, for example interconnection busbars or other electrical connectors, may be provided instead of the first cold plate assembly 20-1 and second cold plate assembly 20-2 shown in figure 1.

The plurality of battery cells 40 in the battery module 100 are arranged between the first (top) cold plate assembly 20-1 and second (bottom) cold plate assembly 20-2 and are electrically connected to each other via the first (top) cold plate assembly 20-1 and second (bottom) cold plate assembly 20-2 as elaborated above. More specifically, each battery cell 40 is inserted into a through hole 12 (seen in figure 2) of the cell holder 10 according to the embodiment of the present invention. Each of the first (top) cold plate assembly 10-1 and second (bottom) cold plate assembly 20-2 is mounted on the cell holder 10.

The battery module 100 further comprises a plurality of battery module mounting means 11 for mounting the battery module 100 in a housing of a battery pack. In other words, according to the embodiment of the present invention the battery module 100 may be utilized alone or may be packed in the housing of the battery pack. The battery pack may comprise one or more battery modules 100. In other words, the battery pack according to the embodiment of the present invention may have a modular arrangement comprising a battery pack housing and one or more battery module 100. Combining multiple battery modules 100 within the battery pack provides high level of configurability of the battery pack to meet different requirements such as current output and voltage level.

In the battery module 100, the battery module mounting means 11 may be arranged at the periphery of the cell holder 10.

Optionally, or in addition, the battery module mounting means 11 may be arranged in the central portion of the cell holder 10. More specifically, the battery module mounting means 11 may be fixed in battery module mounting points provided at the periphery of the cell holder 10. Optionally, or in addition, battery module mounting points for battery module mounting means 11 may also be provided in the central portion of the cell holder 10. The number and the position of such mounting points for the battery module mounting means 11 may depend on the size and the weight of the battery module 100-1, 100-2.

The same mounting points and/or the same battery module mounting means 11 may be used for mounting the first (top) cold plate assembly 20-1 and the second (bottom) cold plate assembly 20-2 on the cell holder 10 or other one or more arrangements that provide the function of cooling the plurality of battery cells and electrically connecting the plurality of battery cells to each other.

As shown in figure 1 the shape of the battery module 100, and accordingly, the shape of the cell holder 10 may be that of a parallelepiped, for example, rectangular parallelepiped. In other embodiments of the present invention the shape of the battery module, and accordingly the shape of the cell holder 10, may differ from that of a rectangular parallelepiped and may be any kind of other shape depending on the packaging constraints of the battery module 100 in the battery pack housing as elaborated above. For example, the different battery modules in the battery pack may have different shapes, depending on the packaging constraints of the battery module in the battery pack housing and more particularly, depending on the shape of the battery housing which in turn may depend on the vehicle design.

In addition, the first (top) cold plate assembly 20-1 of the battery module 100-1, 100-2 as shown in figure 1 may comprise two side connections 22, 23 for connecting the main positive and negative terminal of the battery module 100. These side connections 22, 23 may be mounted (fixed or fastened) via first electrical mounting points 13 and second electrical mounting points 13 (shown in figure 2) provided on the cell holder 10 as elaborated further below.

The first electrical mounting points 13 and second electrical mounting points 13 may be provided on one side of the cell holder 10.

In other embodiments of the present invention the first electrical mounting points and second electrical mounting points provided on different sides, for example opposite sides, of the cell holder 10.

In other embodiments of the present invention, in which other one or more arrangements that provide the function of cooling the plurality of battery cells and electrically connecting the plurality of battery cells to each other are provided, other electrical connectors may be used for connecting the main positive and negative terminal of the battery module 100 instead of the side connections 22, 23 shown in figure 1.

Further, the battery module 100 comprises at least one battery management system (BMS) module 30 mounted on the cell holder 10. The at least one battery management system module 30 may be mounted in a recess 14 provided on one side surface of the cell holder 10. In general, the battery management system module 30 is an electronic system comprising one or more electronic circuits for managing the plurality of battery cells 40, for example monitoring the voltage of all or at least part of the battery cells 40, monitoring the temperature of all or at least part of the battery cells 40, performing calculations, giving instructions and similar.

Figure 2 shows an exploded view of the battery module 100 provided as an example of the parts of the battery module 100 and the construction according to the embodiment of the present invention.

As shown in figure 2 the battery module 100 comprises the cell holder 10 and the plurality of battery cells 40 having an elongated form with a positive pole 41 (or terminal), schematically represented with a plurality of concentric circles on one axial end and a negative pole 42 (or terminal), schematically represented as being entirely flat, on the opposite axial end. The plurality of battery cells 40 are arranged parallel to one another along their respective longitudinal axes. The plurality of battery cells 40 are arranged in groups of a predetermined number of battery cells. As shown in figure 2, the plurality of battery cells 40 being arranged in groups of a predetermined number of battery cells 40 means that the orientation of the positive pole 41 and the negative pole 42 of the battery cells, with respect to the axis denoted as bottom-top in figure 2 alternates between the different groups. Other orientations of the plurality of battery cells are also possible according to particular design specifications of the battery module 100, such as output current and voltage level.

The number of battery cells 40 in each group may be varied (for example it can be any number from 1 to n), as well as the number of groups of battery cells, to achieve different output current and voltage level of the battery module 100. Further, the number of battery cells 40 between all battery modules 100 being arranged in the battery pack may be the same. In other embodiment of the present invention, the number of battery cells between all battery modules 100 arranged in the battery pack may be different.

Each of the battery cells 40 is, when the battery module 100 is assembled, inserted in a respective through hole 12 of the cell holder 10 and fixed in the respective through hole 12.

The battery module 100 comprises further at least one battery management system (BMS) module 30 as elaborated above. By way of example, the battery module 100 shown in figure 2 comprises two battery management system modules 30. The number of battery management system modules provided in the battery module 100 may depend on the number of battery cells 40 in the battery module 100.

The BMS 30 is mounted on the side of the battery module 100, and in particular on a side surface of the cell holder 10 and more specifically, is mounted in a recess 14 provided on one side surface of the cell holder 10. For example, in the battery module 100 shown in figure 2 the two BMSs are mounted in recesses 14 provided on opposite side surfaces of the cell holder 10. The recesses 14 may also be provided on the same side surface of the cell holder 10.

The two plates 20-1, 20-2 at the top and the bottom of the battery module 100 are the above elaborated two cold plate assemblies according to the embodiment of the present invention (first (top) cold plate assembly 20-1 and second (bottom) cold plate assembly 20-2).

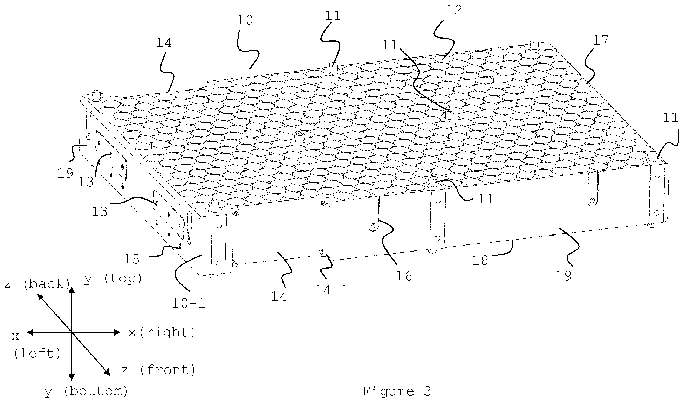

Figure 3 shows schematically the cell holder 10 for the battery module 100 according to the embodiment of the present invention.

The cell holder 10 comprises a body 10-1. The body 10-1 is a solid block. The body 10-1 has a top surface 17, a bottom surface 18, a plurality of side surfaces 19 connecting the bottom surface 18 and the top surface 17, and a plurality of through holes 12 extending between the top surface 17 and the bottom surface 18. Each through hole 12 is arranged to receive at least one battery cell 40.

In some embodiments of the present invention the body 10-1 has a shape (form) of a parallelepiped. In some embodiments of the present invention the body 10-1 may have a shape of a rectangular parallelepiped. In other embodiments of the present invention the shape of the body 10-1 may differ from that of a rectangular parallelepiped and may be any kind of other shape depending on the packaging constraints of the battery module 100 in the battery pack housing as elaborated above.

The top surface 17 and the bottom surface 18 are parallel to each other. The side surfaces 19 are perpendicular to the top surface 17 and the bottom surface 18. In one embodiment of the present invention the body 10-1 may have four side surfaces 19, the opposing side surfaces 19 being parallel to each other. In a different embodiment of the present invention the body 10-1 may have more than four side surfaces 19.

For example, the body 10-1 may have more than four side surfaces 19 since one or more recesses 14, each recess 14 being arranged to receive the battery management system module 30 as elaborated above, each recess having a predetermined depth may be provided on at least one side surface 19. For example, the cell holder shown in figure 3 comprises two recesses 14 arranged on opposite side surfaces 19, each recess 14 being arranged to receive one battery management system module 30.

Further, the body 10-1 may have more than four sides surfaces when the shape of the body 10-1 is other shape different from that of a parallelepiped.

Each recess 14 may have a depth that enables that the battery management system module (BMS) 30 (shown in figures 1 and 2) fits in the recess 14 when mounted. For example, the depth of the recess 14 may be the same as or higher (larger) than the thickness of the battery management system module 30. This facilitates the compactness of the battery module 100. In a different embodiment of the present invention the one or more recesses 14 may be omitted, such that the at least one battery management system module 30 is mounted on the side surface 19. The battery management system module 30 may be mounted by the use of different mounting means, such as nuts and bolts in the respective recess 14. In other words, one or more mounting points 14-1 may be provided in the recess 14, arranged to receive mounting means for mounting the battery management system module 30.

The through holes 12 have tubular shape with a cross-sectional diameter that enables that at least one battery cell 40 is inserted in each through hole 12. The through holes 12 may have smooth walls. Further, each battery cells 40 may be fixed, for example by gluing, in the respective through hole 12 when inserted in the respective through hole 12. Fixing each battery cell 40 in the respective through hole 12, for example by gluing, even further increases the stability of the mounted battery cells 40, as well as the cell holder 10 and the battery module 100 since each battery cell 40 by being fixed (for example glued) in the respective through hole 12 becomes a structural part of the battery module 100 through the cell holder 10. In this way, each through hole 12 holds firmly at least one battery cell 40 when inserted and fixed in place in all three directions x, y and z.

As elaborated above, the cell holder 10 may have a shape different from the one shown in figure 3. The number of through holes 12 may differ between cell holders 10 with different shape.

The material of the cell holder 10 is a thermally insulating material. In addition, the material of the cell holder 10 is an electrically insulating material. The material of the cell holder 10 being thermally insulating material enables that transfer of heat between the different battery cells 40 inserted in the cell holder is suppressed. In other words, the cell holder 10 prevents thermal runaway propagation from one battery cell 40 to the surrounding battery cells 40. The cell holder 10 being electrically insulating material enables that electrical short circuits between different battery cells 40 that may occur when, for example, a housing of a battery cell 40 is damaged are supressed. In this embodiment of the present invention the material of the cell holder 10 is any one of a composite polymer, ceramic, mica, alumina, silicon and any blend of one or all.

In this way, the body 10-1 of the cell holder 10 is a solid block and therefore, further to providing thermal and electrical insulation between the plurality of battery cells 40 when inserted and fixed (for example glued) in the respective through holes 12, it acts as a structural component of the battery module 100 when assembled, which in turn is installed in the battery pack as elaborated above. The fixed (for example glued) battery cells also act as a structural component via the cell holder 10. For example, when the battery pack is installed in a vehicle, the cell holder 10 transfers forces from the vehicle chassis as well as aids in overall improvement of the vehicle stiffness.

Even further, since the material of the cell holder 10 is thermally insulating and hence prevents thermal runaway propagation from one battery cell 40 to other surrounding battery cells 40 the through holes 12 can be provided close to each other which increases the packing density of the battery cells 40 in the battery module 100. This enables that the number of battery cells 40 in the battery module 100 is increased.

The cell holder 10 comprises further a plurality of battery module mounting means 11 for mounting the battery module 100 in the battery pack housing as elaborated above. The plurality of battery module mounting means 11 are arranged at different positions in different portions of the cell holder 10, for example are arranged at the periphery of the cell holder 10 and/or in the central portion of the cell holder 10.

Each battery module mounting means 11 is fixed in a corresponding battery module mounting point 11-1. Accordingly, a plurality of battery module mounting points 11-1 are provided in the cell holder 10. The plurality of battery module mounting points 11-1 may be provided on at least one side surface and/or in one or more through holes extending between the top surface 17 and the bottom surface 18 of the body. For example, the plurality of battery module mounting points 11-1 may be provided in through holes in the central portion of the cell holder 10 and/or in through holes provided at the periphery of the cell holder 10 and/or in recesses or cut-outs provided on one or more the side surfaces 19 of the body 10-1 of the cell holder 10.

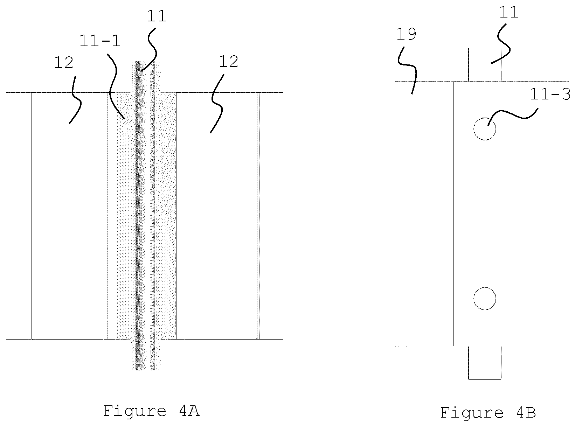

Different examples of battery module mounting points 11-1 and battery module mounting means 11 are shown in figures 4A and 4B.

Figure 4A shows a cross-section of a part of the cell holder 10 and more specifically shows a cross-section of a through hole and the battery module mounting point 11-1 provided in the through hole. In other words, the through hole may be seen as a battery module mounting point 11-1. The thorough hole may be provided in the central portion of the cell holder 10 but may also be provided on the periphery of the cell holder 10. As seen in figure 4A the through hole in which the battery module mounting point 11-1 is provided is arranged between through holes 12 that are arranged to receive at least one battery cell 40 and may have a cross-sectional dimeter that is the same or different from the cross-sectional diameter of the through holes 12 that are arranged to receive at least one battery cell 40. The walls of this through hole may be smooth but may also be provided with threading (threaded through hole) for mounting the corresponding battery module mounting means 11.

The corresponding battery module mounting means 11 may comprise, as shown in figure 4A, two parts: an outer part and an inner part. The outer part may have a cylindrical (tubular) shape that can fit in the through hole (battery module mounting point 11-1). The inner part may also have a cylindrical (tubular) shape.

Figure 4B shows an example of battery module mounting means 11 arranged in the battery module mounting point 11-1 provided in a recess or a cut-out on the side surface 19. In other words, the recess or the cut-out on the side surface 19 may be seen as the battery module mounting point 11-1. The battery module mounting means 11 may also comprise two parts: an outer part and an inner part. The outer part has a shape that can fit in the corresponding recess or cut-out on the side surface 19 (battery module mounting point 11-1). The inner part may have a cylindrical (tubular) shape.

As shown in figures 4A and 4B the inner part has hight which is higher (greater) than the hight of the outer part (or the inner part is longer than the outer part) and facilitates the mounting of the battery module 100 in the battery pack housing.

In the battery module mounting means 11 shown in figure 4A and 4B the inner part may be inserted in the outer part and fixed thereto. The outer part and the inner part may also be integrally formed with each other, for example during the fixing to each other. The battery module mounting means may also be a one-part piece with a shape of the combined outer part and inner part when inserted in the outer part as elaborated above. Further, the battery module mounting means 11 may also comprise more than the above-described outer part and inner part depending, for example, on the particular design specifications of the housing of the battery pack in which the battery module 100 is mounted.

As elaborated above, each battery module mounting means 11 is fixed in the corresponding battery module mounting point 11-1. The fixing of each battery module mounting means 11 in the corresponding mounting point 11-1 may be performed in different ways in different embodiments of the present invention.

In one embodiment of the present invention, the battery module mounting means 11 may be glued in the corresponding mounting point 11-1.

In other embodiment of the present invention, the battery module mounting means 11 may be overmolded with cell holder material. Accordingly, the battery module holder mounting means 11 by being overmolded with the cell holder material becomes an integral part of the cell holder 10. This way of fixing the battery module holder means 11 further increases the stability of fixed battery module 100 in the battery pack.

In still other embodiments of the present invention other ways of fixing of the battery module mounting means 11 may also be applied. For example, when the walls of the through hole 12 are provided with threading, the outer part may have corresponding features to enable the fixing.

In embodiments of the present invention a combination of the different ways of fixing may also be applied.

In embodiments of the present invention, the battery module mounting means 11 that are fixed in a battery module mounting point provided in a recess or a cut-out on the side surface 19 as shown in figure 4B, in addition to the above-described ways of fixing, or as an alternative to the described ways of fixing, may be fixed in the recess or cut-out by fastening means 11-3, for example nuts and bolts.

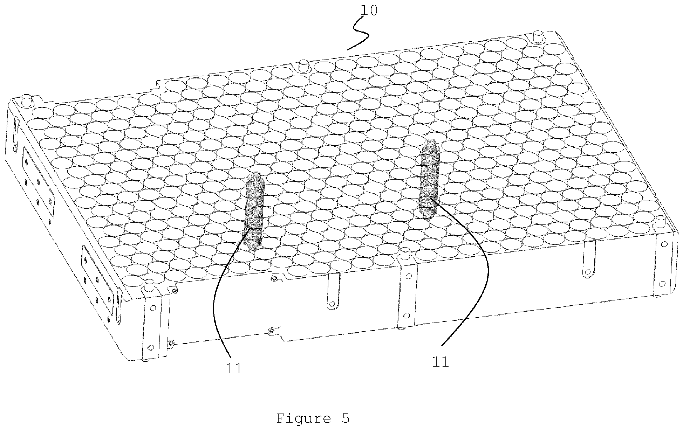

Figure 5 shows schematically the cell holder 10 with highlighted battery module mounting means 11 fixed in respective battery module mounting point 11-1 provided in through holes of the cell holder.

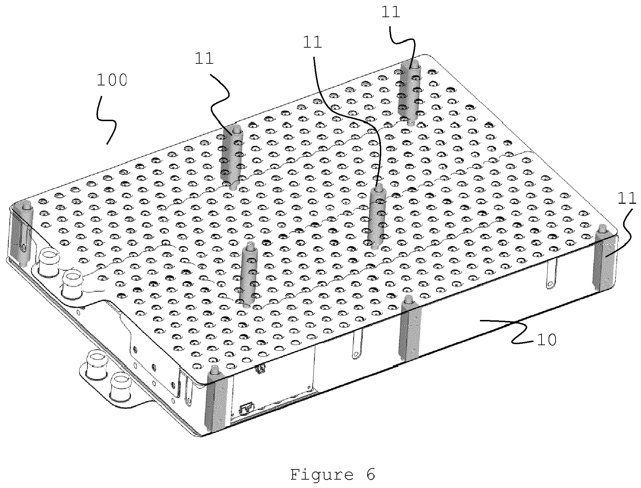

Figure 6 show the assembled battery module 100 with highlighted battery module mounting means 11 for mounting the battery module in the battery pack housing. As elaborated above, the plurality of battery module mounting means 11 are fixed in the battery module mounting points 11-1 provided in through holes extending between the top surface 17 and the bottom surface 18 provided in the central portion of the cell holder 10 and in recesses or cut-outs provided on side surfaces 19 of the cell holder 10. For example, as elaborated above, the battery module mounting means 11 are overmolded with the cell holder material.

The body 10-1 of the cell holder 10 is further provided with two electrical mounting points 13, i.e. a first electrical mounting point 13 and a second electrical mounting point 13 for mounting of electrical connectors. For example, such electrical connectors may include busbars or cables for establishing an electrical connection between different battery modules 100 when mounted in the housing of battery pack. In this way the main positive and negative terminals of the battery module 100 are connected to other battery modules 100 and/or other components on the battery pack.

By way of a specific example, the side connections 22 and 23 of the first cold plate assembly 20-1 shown in figures 1 and 2 or other electrical connectors, interconnectors, busbars or similar connectors that electrically connect the plurality of battery cells with each other are sandwiched between the cell holder 10 and the electrical connectors for establishing an electrical connection of the battery module 100 with other battery modules in the battery pack housing and/or other components of the battery pack. The position of the first electrical mounting 13 and the second electrical mounting point 13 may differ in different embodiments of the present invention. For example, the first electrical mounting point 13 and the second electrical mounting point 13 may be provided on two opposite side surfaces 19 of the plurality of side surfaces (for example the left most side surface 19 and right most side surface 19) of the body 10-1. Further, the first electrical mounting point 13 and the second electrical mounting point 13 may be provided on one side surface 19 of the plurality of side surfaces (for example the left most side surface as shown in figure 3). The first electrical mounting point 13 and the second electrical mounting point 13 may also be provided on the front side surface and/or the back side surface of the body 10-1 of the cell holder 10. However, the electrical mounting points 13 are optional, because the interconnection between the modules may be performed in different ways depending on the design characteristics of the battery module 100.

The first electrical mounting point 13 and the second electrical mounting point 13 may be, for example, holes extending to a predetermined depth in the body 10-1 of the cell holder 10 parallel to the top surface 17 and the bottom surface 18 (x direction in figure 3) and may be arranged to receive mounting means for mounting (fixing or fastening) the electrical connectors for establishing an electrical connection of the battery module 100 with other battery modules in the battery pack housing and/or other components of the battery pack. For example, the holes may be threaded holes arranged to receive bolts, screws, rivets, threaded rods and similar mounting means.

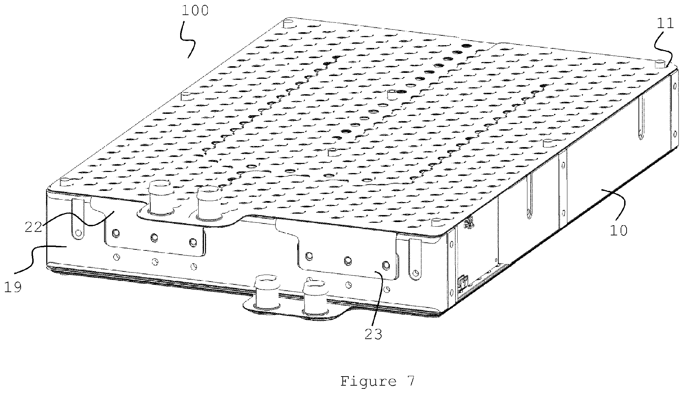

Figures 7 shows a view of the assembled battery module with the side connections 22 and 23 of the first cold plate assembly 20-1 shown in figures 1 and 2 which are parallel to the side surface 19 of the cell holder 10 and are positioned such that they can be sandwiched between the cell holder 10 and the electrical connectors for establishing an electrical connection of the battery module 100 with other battery modules 100 and/or other components of the battery pack.

The body 10-1 of the cell holder 10 is further provided with one or more mounting points 15 for mounting protective members (not shown in the figure) for covering the electrical connectors for electrically connecting the battery module 100 to other battery modules 100 and/or other components of the battery pack, and accordingly, the positive terminal and the negative terminal of the battery module 100. These mounting points 15, similar to the electrical mounting points 13 for mounting the electrical connectors, may be for example holes extending to a predetermined depth in the body 10-1 of the cell holder 10 parallel to the top surface 17 and bottom surface 18 arranged to receive mounting means. For example, the holes may be threaded holes arranged to receive bolts, screws, rivets, threaded rods and similar mounting means. Instead of holes, these mounting points 15 may also be protruding features such as clips. These mounting points 15 are provided in the vicinity of the mounting points 13 for mounting electrical connectors. The protective members enable protection against high voltage shock.

The cell holder 10 may comprise further at least one member for mounting a cooling assembly of the battery module 100, for example, the above elaborated first cooling assembly 20-1 and second cooling assembly 20-2. As elaborated above, the battery module mounting means 11 may be used for mounting the cooling assembly of the battery module 100-1, 100-2.

The cell holder 100 may comprise further one or more mounting points for mounting at least one temperature sensor. For example, one or more recesses 16 may be provided on at least one side surface 19 of the body 10-1 as mounting points for mounting one or more temperature sensors. Each recess 16 may be arranged to receive a temperature sensor. The temperature sensor may be mounted by gluing or using mechanical fastening means. When mechanical fastening means are used at least one mounting point for mounting said temperature sensor in the recess 16 may be provided. Still further, one or more holes (or one or more thorough holes) may be provided on predetermined positions on the cell holder 10 as mounting points for mounting one or more temperature sensors. Such one or more holes (or one or more through holes) may be provided between the thorough holes 12 arranged to receive the battery cells 40 with a longitudinal axis that is parallel to the longitudinal axis of the through holes 12 arranged to receive the battery cells 40.

The cell holder 10 may comprise further at least one first frame (not shown in figure 3). The at least one first frame may be arranged on at least one of the plurality of side surfaces 19 of the body 10-1. One first frame may be arranged on each of the plurality of side surfaces 19 respectively. The material of the at least one first frame may be a composite polymer material.

The cell holder 10 may comprise further at least one second frame (not shown in figure 3). The at least one second frame may be arranged on the top surface 17 and/or bottom surface 18 of the body 10-1. The material of the at least one second frame may be any one of composite polymer material, metal or metal alloy. The metal may be aluminium, while the metal alloy may be steel. The material of the first frame may be the same as the material of the second frame or may be different than the material of the second frame. The at least one first frame and the at least one second frame increase even further the structural properties of the cell holder 10 and accordingly increase the structural stability of the battery module 100.

Optionally, in some embodiments of the present invention the cell holder 10 may comprise recesses provided on the top surface 17 and/or bottom surface 18 and extending from the openings of the plurality of through holes 12 on the top surface 17 and/or bottom surface 18 to at least one side surface 19. In this way these recesses provide channels for guiding venting gases released by venting of the battery cells 12 when mounted in the battery module 100 in events such as thermal runaway, overcharge, overheating and similar. Such recesses enable that the released vent gasses escape the environment of the plurality of battery cells and hence increase the safety of the battery module 100.

In the following the steps of assembling the battery module 100 according to the embodiment of the present invention will be elaborated.

In a first step, each one of the plurality of battery cells 40 is inserted in a through hole 12 of the cell holder 10. The cell holder 10 comes as one part on the assembly line.

In a further step, each one of the plurality of battery cells is fixed in the respective through hole 12. The fixing may be performed, for example, by gluing.

If at least one temperature sensor is provided in the battery module 100, in a further step, the at least one temperature sensor is mounted in the provided recess 16 in the body 10-1 of the cell holder or the provided hole or through hole. In addition, one or more temperature sensors may be fixed to one or more battery cells 40.

In a further step the at least one battery management system module 30 is inserted in the corresponding recess 14 and fixed therein.

In still further step, the above described at least one cold plate assembly may be mounted on the cell holder 10. In a different embodiment of the present invention, instead of the described at least one cold plate assembly one or more interconnecting busbars may be mounted for electrically connecting the plurality of battery cells 40 to each other. In addition, also a cooling arrangement other than the described cold plate assembly may be mounted.

Optionally, outer protective layer may also be applied on the battery module 100.

In summary a cell holder 10 for battery module 100 comprising a plurality of battery cells 40 has been described which enables high density of packing of the battery cells 40 and in the same time acts as a structural component of the battery module 100 when mounted (installed) in the housing of the battery pack such that it transfers forces from the vehicle chassis and aids in overall vehicle stiffness. In addition, since each battery cell 40 is in addition fixed (for example glued) in the respective thorough hole 12 when the battery module 100 is assembled, each battery cell 40 by being fixed (for example glued) in the respective through hole acts as a structural component of the battery module 100 via the cell holder 10.

Although detailed embodiments have been described, these only serve to provide a better understanding of the invention defined by the appended claims and are not be seen as limiting.

## Claims

1. A cell holder for a battery module comprising a plurality of battery cells, said cell holder comprising a body, said body having:
- a top surface;
- a bottom surface;
- a plurality of side surfaces connecting the bottom surface and the top surface; and
- a plurality of through holes extending between the top surface and the bottom surface, wherein each through hole is arranged to receive at least one battery cell.

2. The cell holder according to claim 1, wherein the material of the cell holder is a thermally and electrically insulating material.

3. The cell holder according to claim 2, wherein the material of the cell holder is any one of composite polymer material, ceramic, mica, alumina, silicon and any blend of one or all.

4. The cell holder according to any one of claims 1 to 3, further comprising a plurality of battery module mounting means for mounting the battery module in a battery pack housing.

5. The cell holder according to any one of claims 1 to 4, wherein at least one recess is provided on at least one side surface of the body, said at least one recess being arranged to receive a battery management system board.

6. The cell holder according to any one of claims 1 to 5, wherein a first electrical mounting point and a second electrical mounting point for mounting electrical connectors are provided on one side surface of the plurality of side surfaces or on two opposite side surfaces of the plurality of side surfaces of the body.

7. The cell holder according to claim 6, wherein one or more mounting points are provided on the body for mounting protective members for covering the electrical connectors.

8. The cell holder according to any one of claims 1 to 7, further comprising at least one member for mounting a cooling assembly of the battery module.

9. The cell holder according to any one of claims 1 to 8, further comprising at least one mounting point for mounting at least one temperature sensor.

10. The cell holder according to any one of claims 1 to 9, further comprising at least one first frame, wherein the at least one first frame is arranged on at least one of the plurality of side surfaces of the body.

11. The cell holder according to claim 10, wherein the material of the at least one first frame is a composite polymer material.

12. The cell holder according to any one of claims 1 to 11, further comprising at least one second frame, wherein the at least one second frame is arranged on the top and/or bottom surface of the body.

13. The cell holder according to claim 12, wherein the material of the at least one second frame is any one of a composite polymer material, metal or a metal alloy.

14. A battery module comprising the cell holder according to any one of claims 1 to 13 and a plurality of battery cells, wherein each battery cell is fixed in a through hole of the plurality of through holes of the cell holder.

15. A method of assembling the battery module according to claim 14, the method comprising the steps of:
inserting each one of the plurality of battery cells in a through hole of the cell holder;
fixing each one of the plurality of the battery cells to the respective through hole.
